# EUROPÄISCHE PATENTSCHRIFT

(11) **EP 0 988 128 B1**
(45) Veröffentlichungstag und Bekanntmachung des Hinweises auf die Patenterteilung: **06.11.2002**
(21) Anmeldenummer: 98937451.7
(22) Anmeldetag: 05.06.1998
(51) Int. Cl.: B23K 1/008

(54) **PROZESSKAMMER ZUR THERMISCHEN BEHANDLUNG VON OBERFLÄCHEN MIT EINEM PROZESSGAS**
PROCESSING STATION FOR HEAT TREATMENT OF SURFACES USING A PROCESS GAS
CHAMBRE DE TRAITEMENT POUR LE TRAITEMENT THERMIQUE DE SURFACES AU MOYEN D'UN GAZ DE TRAITEMENT

(30) Priorität: 06.06.1997 DE 19723894
(43) Veröffentlichungstag der Anmeldung: 29.03.2000
(73) Patentinhaber: Seho Systemtechnik GmbH, 97892 Kreuzwertheim (DE)
(72) Erfinder: AMMON, Edward, D-97877 Wertheim-Vockenrot (DE); ULLRICH, Rudolf, D-97892 Kreuzwertheim (DE); DIEHM, Rolf, D-97877 Wertheim (DE)
(74) Vertreter: Bardehle, Heinz, Dipl.-Ing.
(86) Internationale Anmeldenummer: EP9803393
(87) Internationale Veröffentlichungsnummer: WO98055256

(56) Entgegenhaltungen:
- US-A- 5 338 008
- US-A- 5 579 981

## Beschreibung

Die Erfindung bezieht sich auf eine Prozeßkammer gemäß dem Oberbegriff des Patentanspruch 1.

Eine derartige Prozeßkammer ist in der DE-OS 44 16 959 beschrieben und dargestellt. Diese Prozeßkammer dient insbesondere dazu, elektrische Bauteile auf Leiterplatten mittels des sog. Reflow-Prinzips zu verlöten. Dabei wird der durch eine Heizeinrichtung erhitzte Prozeßgasstrom auf die unter oder über den Reflektoren transportierte Leiterplatten gerichtet, wobei durch eine Lötpaste entsprechend vorbereitete Lötstellen aufgrund ihrer Erwärmung verlötet werden. Der Prozeßgasstrom wird dabei in einem teilweisen Kreislauf mittels des Gebläses durch eine Kanalanordnung gedrückt, die mit den Reflektoren in Verbindung steht, so daß der Prozeßgasstrom in gewünschter Ausrichtung auf die Leiterplatten auftrifft. Derartige Prozeßkammern können mehrfach, insbesondere hintereinander, angeordnet sein und geben dazu an ihrem Ausgang soviel Prozeßgas ab, wie am Eingang zugeführt wird. Dieses abgegebene Prozeßgas ist stark mit flüchtigen Bestandteilen beladen, die im wesentlichen von verdampftem Lötmittel stammen. Bei dieser Art des Lötens von Leiterplatten wird nämlich das den vorbereiteten Lötstellen über die Lötpaste zugegebene Flußmittel erschmolzen und verdampft. Vielfach wurde der Prozeßgasstrom hierzu vollständig abgesaugt. Es ist außerdem bekannt, in den betreffenden Absaugkanal mechanische Filter einzubauen, die zumindest teilweise das im abgesaugten Luftstrom enthaltene Flußmittel ausfiltern. Die hierfür verwendeten mechanischen Filter verstopfen sich dabei im Laufe der Zeit und müssen demgemäß von Zeit zu Zeit erneuert werden. Weiterhin hat man im Anschluß an eine Strecke mit mehreren aufeinanderfolgenden Prozeßkammern eine sog. Kältefalle vorgesehen, in der der aus der Strecke austretende Prozeßgasstrom über eine stationäre Kühlrippenanordnung geleitet wird, auf der sich die mitgeführten Lötmittelanteile aufgrund von Kondensation niederschlagen. Solche Kältefallen erhalten somit nach einiger Zeit eine harte Schicht aus kondensiertem Lötmittel, wenn man die Kältefalle nicht mindestens täglich reinigt, solange das kondensierte Flußmittel noch flüssig ist. Ein solcher Reinigungsvorgang ist aufwendig.

Die vorstehend beschriebenen Methoden der Beseitigung von verdampftem Flußmittel sind bei den eingangs beschriebenen Prozßkammern selbst nicht anwendbar. Der Erfindung liegt daher die Aufgabe zugrunde, die Prozeßkammer gemäß der eingangs angegebenen Gestaltung so auszubilden, daß sich mit ihr verdampftes Flußmittel und dabei entstandene Aerosole (Schwebstoffe) in besonders großem Umfang beseitigen lassen, ohne daß dabei Reste in erheblichem Umfang in der Prozeßkammer verbleiben.

Diese Aufgabe wird durch die im Kennzeichen des Anspruchs 1 angegebenen Maßnahmen gelöst.

Durch die Kühlzone in der Kanalanordnung ergibt sich eine Kondensation der von dem Prozeßgasstrom mitgeführten Schwebstoffe, also insbesondere des Flußmittels, direkt in der Prozeßkammer. Diese kondensierten Bestandteile können von der Kühlzone aufgenommen und dort einem austauschbaren Aufnahmeorgan zugeführt werden. Dieses Aufnahmeorgan, z.B. ein Einschubteil, kann bei einem bestimmten Grad der Aufnahme von Fremdstoffen gegen ein anderes ausgetauscht werden, womit der Prozeßkammer insgesamt die von dem Verdampfen des Lötmittels stammenden Fremdstoffe entfernt werden. Auf diese Weise unterliegt das teilweise im Kreislauf geführte Prozeßgas einer ständigen Reinigung, durch die ein Verschmutzen der Prozeßkammer auch bei längerer Benutzung, insbesondere Dauerbenutzung, vollständig vermieden wird.

Eine zweckmäßige Gestaltung der Kühlzone ergibt sich dann, wenn diese durch eine Sprühkammer zum Versprühen einer Kühlflüssigkeit gebildet ist, der ein Filter als Aufnahmeorgan nachgeordnet ist, das mit dem Gasstrom mitgerissene Flüssigkeitstropfen ausfiltert. Durch die versprühte Kühlflüssigkeit ergibt sich ein besonders intensiver Entzug der von dem Prozeßgas mitgeführten Fremdstoffe, da diese bei ihrer Kondensation sofort von der versprühten Kühlflüssigkeit gewissermaßen eingefangen und mitgenommen werden, verbleibende von dem Prozeßgasstrom mitgerissenen Kühlflüssigkeitstropfen werden von dem das Aufnahmeorgan bildenden Filter aufgenommen. Das Filter läßt sich ohne weiteres von Zeit zu Zeit austauschen, wenn sich herausstellt, daß es durch die Fremdstoffe verstopft bzw. der von ihm durchzulassende Prozeßgasstrom zu stark gebremst wird. Vorteilhaft gestaltet man die Leitung der Kühlflüssigkeit so, daß die Sprühkammer und das Filter mit einem gemeinsamen Auslass für die Kühlflüssigkeit versehen sind, der die Kühlflüssigkeit über eine Reinigungsvorrichtung, insbesondere Zentrifuge, einem Zulauf an der Sprühkammer zuführt. Durch die Rückgewinnung der gereinigten Kühlflüssigkeit tritt kein Verlust an Kühlflüssigkeit ein.

Die Wirksamkeit der Sprühkammer im Sinne der Aufnahme mitgeführter Fremdstoffe läßt sich dadurch erhöhen, daß die Sprühkammer einen Wärmeaustauscher enthält, der von einer Kühlflüssigkeit durchströmt ist. Hierdurch ergibt sich zusätzlich zu der Wirkung der Kühlflüssigkeit auf den durch die Sprühkammer hindurch geführten Prozeßgasstrom eine entsprechende Abkühlung des Prozeßgases, was das Kondensieren der Fremdstoffe beschleunigt.

Eine besonders wirksame Gestaltung des Filters ergibt sich dann, wenn das Filter in einer ersten Stufe als mechanisches Filter, z.B. als Drahtgewirk, und in einer zweiten Stufe als chemisches Filter, z.B. Aktivkohlefilter, ausgebildet ist. Bei dieser Gestaltung wird in der ersten Stufe der wesentliche Anteil der vom Prozeßgasstrom noch mitgeführten Fremdstoffe ausgefiltert, während dann im Prozeßgasstrom weiterhin enthaltene flüchtige Fremdstoffe von dem chemischen Filter entfernt werden. Hierdurch ergibt sich eine besonders intensive Reinigung des Prozeßgases, so daß dieses im Kreislauf ohne weiteres für längere Zeit verwendet werden kann.

In den Figuren ist ein Ausführungsbeispiel der Erfindung dargestellt. Es zeigen:
- **Figur 1**: eine Seitenansicht einer auf der Betrachterseite offenen Prozeßkammer;
- **Figur 2**: einen Schnitt gemäß der Linie A-A in Fig. 1, und zwar betreffend eine geschlossene Prozeßkammer.

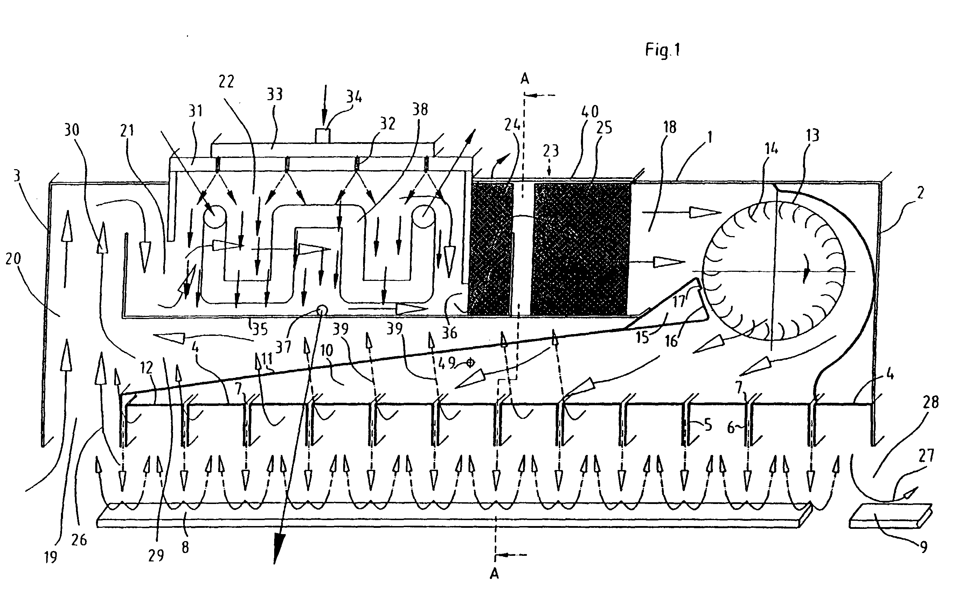

Die in der Figur 1 dargestellte Prozeßkammer wird von dem Gehäuse 1 eingeschlossen, das sich mit seinen seitlichen Wänden 2 und 3 in Richtung auf eine Gruppe von Reflektoren 4 erstreckt. Die Reflektoren 4 bilden je ein langgestrecktes kastenförmiges Element mit jeweils zwei Seitenteilen 5 und 6, die jeden Reflektor 4 nach unten hin offen lassen. Die sich quer über die Breite der Prozeßkammer erstreckende Länge der Reflektoren 4 ist durch die schräggerichteten Linien an den oberen Enden der Seitenteile 4 und 6 perspektivisch angedeutet. Zwischen den Reflektoren 4 sind aufgrund des Abstandes der Seitenteile 5,6 zu den Seitenteilen des jeweils benachbarten Reflektors schlitzförmige Durchführungen 7 gebildet, die in weiter unten erläuterter Weise für die Zuleitung eines Prozeßgasstromes zu einer Leiterplatte 8 dienen. Die Reflektoren 4 überdecken die gesamte Breite der Leiterplatte 8, die hier zur Vereinfachung der Darstellung übertrieben schmal dargestellt ist.

Oberhalb der Reflektoren 4 ist als Begrenzung für einen von Prozeßgas durchströmten Keilkanal 10 dessen Decke 11 dargestellt, die sich von dem an der linken Seite dieses Keilkanals befindlichen Reflektor 12 nach rechts hin mit zunehmendem Abstand von den Reflektoren 4 erstreckt. An seinem rechten Ende wird der Keilkanal 10 von dem Schaufelrad 13 begrenzt, das gemäß dem eingezeichneten Pfeil in Drehung versetzt wird und dabei in bekannter Weise als Rotationsgebläse wirkt. Das Schaufelrad 13 schiebt mit seinen einzelnen Schaufeln 14 die umgebende Luft gegen ein dreieckförmig ausgebildetes Endstück 15 der Decke 11, das an seiner dem Schaufelrad 13 zugewandten Seite die Wand 16 besitzt. Die Wand 16 weist die Stufe 17 auf, die in bekannter Weise als Wirbelbildner wirkt, der dafür sorgt, daß bei der Rotation des Schaufelrades 13 dessen Schaufeln 14 die von ihnen mitgeführte Luft in den Eingang des Keilkanals 10 drücken. Das somit in den Keilkanal 10 eingeleitete Prozeßgas wird in die Durchführungen 7 geleitet, wobei durch die Keilform des Keilkanals 10 dafür gesorgt wird, daß trotz der Abführung von Prozeßgas längs der einzelnen Reflektoren 4 durch deren Durchführungen 7 die Strömungsgeschwindigkeit im Keilkanal 10 in Richtung auf den letzten Reflektor 12 hin im wesentlichen gleich bleibt, so daß die einzelnen Durchführungen 7 mit praktisch gleichbleibender Strömungsgeschwindigkeit das von ihnen geführte Prozeßgas auf die darunter geführte Leiterplatte 8 leiten. Auf diese Weise ergibt sich für die jeweils unter der Anordnung der Reflektoren 4 momentan angeordnete Leiterplatte eine gleichmäßige Beaufschlagung mit Prozeßgas.

Das Schaufelrad 13 saugt bei seiner Drehung Prozeßgas aus dem Saugkanal 18 an, das dem Saugkanal auf folgendem Wege zugeführt wird: Prozeßgas strömt gegebenenfalls unter leichtem Überdruck in den Einlaß 19 unterhalb der Wand 3 in das Innere der Prozeßkammer ein und gelangt dabei in den Steigkanal 20 und von dort in den Anfang 21 des Saugkanals 18. In diesem Saugkanal 18 ist als Kühlzone die Sprühkammer 22 und dieser folgend das Filter 23 eingebaut, das aus einer ersten Stufe 24 und einer zweiten Stufe 25 besteht, auf deren Funktion weiter unten näher eingegangen wird.

Es besteht somit eine Führung eines Prozeßgasstromes (dargestellt durch die als leere Keile gezeichneten Pfeile), die von dem Einlaß 19 in den Steigkanal 20, über den Saugkanal 18 mit seinem Anfang 21, die Sprühkammer 22, das Filter 23, das Schaufelrad 13 und den Keilkanal 10 bis in die Durchführungen 7 reicht. Ein Teil des auf die Leiterplatte 8 auftreffenden Prozeßgasstromes, der von der Leiterplatte 8 reflektiert wird, gelangt gemäß dem Pfeil 26 zurück in den Einlaß 19, ein anderer Teil, dargestellt durch den Pfeil 27 tritt am Auslauf 28 unterhalb der Wand 2 aus.

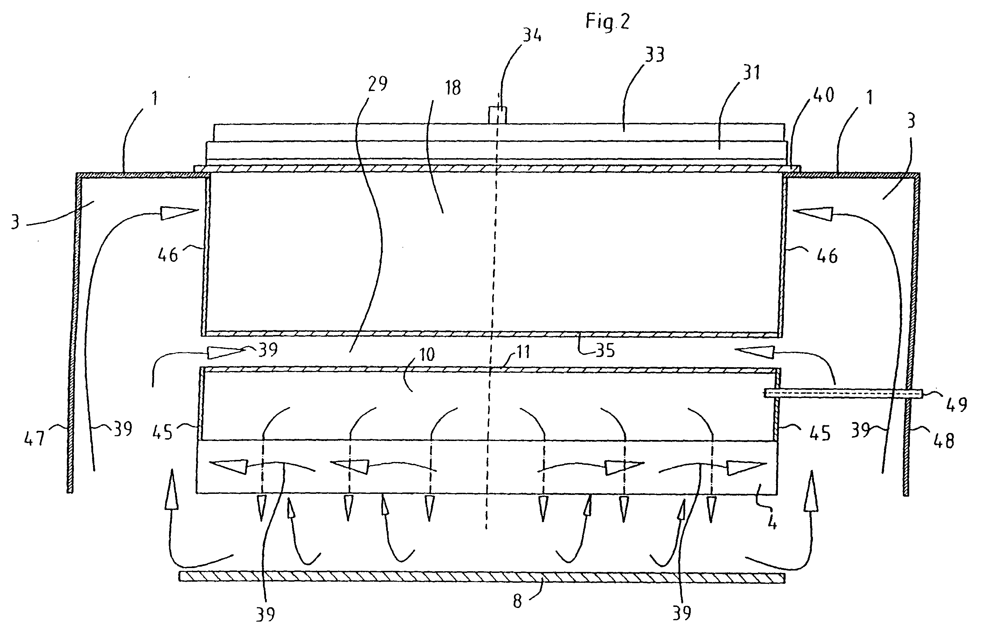

Die Prozeßkammer weist weiterhin in Fig.1 nicht dargestellte Seitenwände (siehe Fig.2 Seitenwände 45,46) auf, die sowohl den Keilkanal 10 als auch den Saugkanal 18 seitlich begrenzen. Diese Art der Gestaltung ist im Einzelnen in der Figur 3 der oben erwähnten DE-OS 44 16 959 dargestellt. Aufgrund dieser Wände 45,46 ergibt sich eine Führung von Prozeßgas aus den offenen Enden der Reflektoren 4, dargestellt durch die Pfeile 39, das unter Umgehung des Keilkanals 10 in den an seinem linken Ende offenen Brückenkanal 29 zwischen Boden 35 und Decke 11, in den Einlaß 19 fließt. Das aus dem Brückenkanal 29 her einströmende Prozeßgas ist mit dem Pfeil 30 bezeichnet. Aufgrund dieses Überströmens von Prozeßgas aus dem Bereich unterhalb der Reflektoren 4 her über den Brückenkanal 29 in den Steigkanal 20 ergibt sich ein Kreislauf für den Prozeßgasstrom, von dem allerdings in der oben beschriebenen Weise ständig ein Teil über den Auslauf 28 (siehe Pfeil 27) abgezweigt wird. Die Seitenbegrenzungen für den Prozeßgasstrom gemäß den Pfeilen 39 bilden die in Fig.2 dargestellten äußeren Wände 47 und 48. Durch den Gaseinlaß 49 kann ein inertes Gas dem Prozeßstrom zugefügt werden, das durch den von ihm erzeugten Überdruck dafür sorgt, daß durch den Auslaß 28 keine Luft und damit Sauerstoff in den Bereich der Leiterplatte 8 gelangen kann, durch den deren Lötstelle geschädigt werden könnten.

Die in dem Saugkanal 18 eingebaute Sprühkammer 22 besitzt den Deckel 31, der mit 4 Sprühdüsen 32 versehen ist, durch die eine Kühlflüssigkeit in den Innenraum der Sprühkammer eingesprüht wird (siehe als volle Keile dargestellte Pfeile). Die Sprühdüsen 32 erhalten die Sprühflüssigkeit über den Verteiler 33 und den Zulauf 34. Aufgrund der in der Sprühkammer sich ergebenden Versprühung der Kühlflüssigkeit bildet sich in dieser eine Art Dusche aus, die von dem Prozeßgas mitgeführte Fremdstoffe auffängt und am Boden 35 der Sprühkammer 22 ablagert. Auf diese Weise wird der wesentliche Teil der vom Prozeßgas mitgeführten Fremdstoffe aus dem Prozeßgasstrom entfernt. Das somit weitgehend gereinigte Prozeßgas gelangt dann über die Auslaßöffnung 36 in die folgende erste Stufe 24 des Filters 23. Diese erste Stufe 24 enthält ein mechanisches Filter, z.B. ein Drahtgewirk, das nach Öffnen des Deckels 40 nach oben herausnehmbar ist, so daß bei sich abzeichnender Verstopfung der ersten Stufe 24 das Drahtgewirk gegen ein neues ausgetauscht werden kann. Gemäß den eingezeichneten Pfeilen im Bereich der ersten Stufe 24 und der zweiten Stufe 25 gelangt das Prozeßgas dann in die zweite Stufe 25, die hier als Aktivkohlefilter ausgebildet ist und ggf. noch vorhandene Reste von Fremdstoffen, insbesondere Aerosole, ausfiltert, so daß am Ausgang der zweiten Stufe 25 gegenüber dem Schaufelrad 13 vollständig gereinigtes Prozeßgas von dem Schaufelrad 13 angesaugt werden kann. Auch das Aktivkohlefilter ist nach Öffnen des Deckels 40 aus dem Saugkanal 18 herausnehmbar, so daß es jederzeit durch ein neues ausgewechselt werden kann.

Oberhalb des Bodens 35 befindet sich der Auslaß 37, über den sich am Boden 35 sammelnde Kühlflüssigkeit abgeleitet wird (siehe im Auslaß 37 entspringender Pfeil). Die Kühlflüssigkeit gelangt dann in hier nicht dargestellter Weise in eine bekannte Reinigungsvorrichtung, z.B. eine Zentrifuge, in der von der Kühlflüssigkeit mitgeführte Fremdstoffe ausgeschieden werden. Die somit von der Zentrifuge gereinigte Kühlflüssigkeit wird dann wieder dem Zulauf 34 zugeführt, so daß die Kühlflüssigkeit in ständigem Kreislauf und immer wieder gereinigt in die Sprühkammer 22 gelangt. Damit ergibt sich eine kontinuierliche Reinigung des Prozeßgasstromes, der nur bei sich abzeichnender Verstopfung der ersten Stufe 24 oder der zweiten Stufe 25 des Filters 23 kurzzeitig unterbrochen werden muß, wenn die erste Stufe 24 bzw. die zweite Stufe 25 ausgewechselt werden muß. Hierfür ist jedoch wegen der Auswechselbarkeit dieser Stufen praktisch nur ein kurzer Handgriff erforderlich. Im Prinzip arbeitet daher die dargestellte Prozeßkammer praktisch mit kontinuierlicher Reinigung des Prozeßgases. Falls erforderlich, kann für die Reinigung der Kühlflüssigkeit außer einer Zentrifuge auch noch irgendeine chemische Reinigungsvorrichtung in bekannter Weise vorgesehen sein.

Gemäß Figur 1 ist weiterhin in der Sprühkammer 22 der aus einem Rohr bestehende Wärmeaustauscher 38 untergebracht, der von einem Kühlmittel durchströmt wird. Der in bekannter Weise wirkende Wärmeaustauscher kühlt intensiv das die Sprühkammer 22 durchströmende Prozeßgas, die dafür sorgt, daß vom Prozeßgas mitgeführte Fremdstoffe, also insbesondere verflüssigtes Flußmittel, kondensiert und hierdurch besser von der versprühten Kühlflüssigkeit aufgefangen und von dieser mitgenommen werden kann. Durch die in der Sprühkammer 22 versprühte Kühlflüssigkeit wird auch der Wärmeaustauscher 38 ständig gereinigt, an dem sich von dem Prozeßgas mitgeführte Fremdstoffe ablagern können.

Figur 2 zeigt die in Fig.1 dargestellte Prozeßkammer im Schnitt längs der Linie A-A aus Fig.1. Wie ersichtlich, wird die Prozeßkammer seitlich von den äußeren Wänden 47 und 48 begrenzt (die bei der Darstellung gemäß Fig.1 parallel zur Zeichenebene liegend zu denken sind). Die Fig.2 zeigt den Saugkanal 18 im Bereich zwischen der ersten Stufe 24 und der zweiten Stufe 25 des Filters 23 mit seinem Boden 35. Der darunter liegende Bereich bildet den Brückenkanal 29, in dem der Prozeßgasstrom in Richtung auf die Wand 3 strömt. Unterhalb des Brückenkanals 29 liegt der Keilkanal 10, der nach unten hin durch die Reflektoren 4 begrenzt wird. Deren Durchführungen 7 werden von dem Prozeßgas durchströmt, das auf die Leiterplatte 8 zu gerichtet ist. Von der Leiterplatte 8 wird das Prozeßgas dann an den Seitenwänden 45 und 46 entlanggeleitet, um in den in Fig.2 nicht sichtbaren Anfang 21 des Saugkanals 18 zu gelangen. Das seitlich aus den offenen Enden der Reflektoren 4 herausströmende Prozeßgas (Pfeile 39) gelangt in den Brückenkanal 29 und von dort in der im Zusammenhang mit Fig.1 beschriebenen Weise ebenfalls in den Anfang 21 des Saugkanals 18.

Der in der Figur 1 dargestellten Prozeßkammer werden einzeln nacheinander in bekannter Weise einzelne Leiterplatten, wie die Leiterplatte 8, zugeführt und in der oben beschriebenen Weise mit Prozeßgas beaufschlagt. Dabei kann es sich um relativ lange Leiterplatten, wie die Leiterplatte 8, handeln, es können aber auch relativ kurze Leiterplatten nacheinander unter der Prozeßkammer vorbeigeführt werden. Eine die Prozeßkammer gerade verlassende Leiterplatte ist die Leiterplatte 9. Bei dem Prozeßgas kann es sich z.B. um Luft, Stickstoff oder Gasgemische handeln.

## Patentansprüche

1. Von einem Gehäuse (1) eingeschlossene Prozeßkammer zur thermischen Behandlung von Oberflächen mit einem Prozeßgas, insbesondere zum Verbinden von elektrischen Bauteilen an Leiterplatten (8, 9), mit einem Gebläse (13, 14) zum Erzeugen eines Prozeßgasstromes und dessen Führung zu einer Gruppe von Reflektoren (4, 12), die so angeordnet sind, daß das Prozeßgas jeweils zwischen zwei benachbarten Reflektoren (4, 12) zu der zu behandelnden Oberfläche strömt, wobei das Gebläse (13, 14) das Prozeßgas durch eine Kanalanordnung (10, 29, 20, 18) drückt, die mit den Reflektoren (4, 12) in Verbindung steht, **dadurch gekennzeichnet, daß** in der direkt in der Prozeßkammer befindlichen Kanalanordnung (10, 29, 20, 18) eine Kühlzone (33) angeordnet ist, die die von dem Gasstrom mitgeführten Fremdstoffe kondensiert und einem nachgeordneten, austauschbaren Aufnahmeorgan (23) zuführt, das in der Kanalanordnung (10, 29, 20, 18) vorgesehen ist.

2. Prozeßkammer nach Anspruch 1, **dadurch gekennzeichnet, daß** die Kühlzone durch eine Sprühkammer (22) zum Versprühen einer Kühlflüssigkeit gebildet ist, der ein Filter (23) als Aufnahmeorgan nachgeordnet ist, das mit dem Gasstrom mitgerissene Flüssigkeitstropfen ausfiltert.

3. Prozeßkammer nach Anspruch 2, **dadurch gekennzeichnet, daß** die Sprühkammer (22) und das Filter (23) mit einem gemeinsamen Auslass (37) für die Kühlflüssigkeit versehen sind, der die Kuhlflüssigkeit über eine Reinigungsvorrichtung, insbesondere Zentrifuge, einem Zulauf (34) an der Sprühkammer zuführt.

4. Prozeßkammer nach Anspruch 2 oder 3, **dadurch gekennzeichnet, daß** die Sprühkammer (22) einem Wärmetauscher (38) enthält, der von einem Kühlmittel durchströmt ist.

5. Prozeßkammer nach einem der Ansprüche 2-4, **dadurch gekennzeichnet, daß** das Filter (23) in einer ersten Stufe (24) als mechanisches Filter, z.B. als Drahtgewirk, und in einer zweiten Stufe (25) als chemisches Filter, z.B. Aktivkohlefilter, ausgebildet ist.

## Claims

1. Processing chamber surrounded by a bousing (1) for the heat treatment of surfaces with a process gas, in particular for joining electrical components to printed circuit boards (8, 9), comprising a blower (13, 14) for producing a process gas flow and guiding it to a group of reflectors (4, 12) arranged in such a manner that the process gas flows between two adjacent reflectors (4,12) to the surface to be treated, the blower (13, 14) forcing the process gas through a channel system (10, 29, 20, 18) connected to the reflectors (4, 12), **characterised in that** a cooling zone (33) is arranged in the channel system (10, 29, 20, 18) situated directly in the processing chamber, said cooling zone condensing the foreign matter entrained by the gas flow and conveying it to a downstream replaceable receiver (23) provided in the channel system (10, 29, 20, 18).

2. Processing chamber according to claim 1, **characterised in that** the cooling zone is formed by a spray chamber (22) for atomising a cooling liquid, a downstream filter (23) serving as the receiver filtering out drops of liquid entrained by the gas flow.

3. Processing chamber according to claim 2, **characterised in that** the spray chamber (22) and the filter (23) are provided with a joint outlet (37) for the cooling liquid which conveys the cooling liquid via a cleaning device, in particular a centrifuge, to an inlet (34) on the spray chamber.

4. Processing chamber according to claim 2 or claim 3, **characterised in that** the spray chamber (22) contains a heat exchanger (38) through which a coolant flows.

5. Processing chamber according to one of claims 2-4, **characterised in that** the filter (23) is designed in a first stage (24) as a mechanical filter, e.g. a wire gauze, and in a second stage (25) as a chemical filter, e.g. an activated charcoal filter.

## Revendications

1. Chambre de traitement renfermée dans un boîtier (1) pour le traitement thermique de surface avec un gaz de traitement, notamment pour relier des composants électriques à des plaquettes à circuits imprimés (8, 9), comportant un ventilateur (13, 14) pour produire un courant de gaz de traitement et le guider jusqu'à un groupe de réflecteurs (4, 12), qui sont disposés de telle sorte que le gaz de traitement circule respectivement entre deux réflecteurs voisins (4, 12) en direction de la surface à traiter, le ventilateur (13, 14) refoulant le gaz de traitement dans un dispositif à canaux (10, 29, 20, 18), qui est relié aux réflecteurs (4, 12), **caractérisée en ce que** dans le dispositif à canaux (10, 29, 20, 18), qui est situé directement dans la chambre de traitement, est disposée une zone de refroidissement (33) qui condense les substances étrangères entraînées conjointement par le courant de gaz et envoie ces substances à un organe de réception remplaçable (23) installé en aval et qui est prévu dans le dispositif à canaux (10, 29, 20, 18).

2. Chambre de traitement selon la revendication 1, **caractérisée en ce que** la zone de refroidissement est formée par une chambre de pulvérisation (22) servant à pulvériser le liquide de refroidissement et en aval de laquelle est disposé, en tant qu'organe de réception, un filtre (23), qui sépare par filtrage des gouttes de liquide entraînées par le courant de gaz.

3. Chambre de traitement selon la revendication 2, **caractérisée en ce que** la chambre de pulvérisation (22) et le filtre (23) comportent une sortie commune (37) pour le liquide de refroidissement, qui envoie le liquide de refroidissement par l'intermédiaire d'un dispositif de nettoyage, notamment une centrifugeuse, à une arrivée (34) débouchant dans la chambre de pulvérisation.

4. Chambre de traitement selon la revendication 2 ou 3, **caractérisée en ce que** la chambre de pulvérisation (22) contient un échangeur de chaleur (38), qui est traversé par un fluide de refroidissement.

5. Chambre de traitement selon l'une des revendications 2 à 4, **caractérisée en ce que** le filtre (23) est formé dans un premier étage (24), sous la forme d'un filtre mécanique, par exemple un treillis de fils, et, dans un second étage, sous la forme d'un filtre chimique, par exemple un filtre à charbon actif.
